# EUROPÄISCHE PATENTSCHRIFT

(11) **EP 3 178 693 B1**
(45) Veröffentlichungstag und Bekanntmachung des Hinweises auf die Patenterteilung: **18.09.2019**
(21) Anmeldenummer: 16201949.1
(22) Anmeldetag: 02.12.2016
(51) Int. Cl.: B60P 7/08, B60P 7/135

(54) **VORRICHTUNG ZUR SICHERUNG VON LADUNG AUF EINER LADEFLÄCHE INSBESONDERE QUER ZUR LÄNGSRICHTUNG EINER LADEFLÄCHE ANGEORDNETE SPERRVORRICHTUNG**
DEVICE FOR SECURING LOADS ON A LOAD SURFACE, IN PARTICULAR LOCKING DEVICE TRANSVERSE TO THE LONGITUDINAL DIRECTION OF A LOAD SURFACE
DISPOSITIF DE SÉCURISATION DE CHARGE SUR UNE SURFACE DE CHARGEMENT EN PARTICULIER DISPOSITIF DE VERROUILLAGE APPOSÉ TRANSVERSALEMENT À LA DIRECTION LONGITUDINALE D'UNE SURFACE DE CHARGEMENT

(30) Priorität: 09.12.2015 DE 202015106712 U
(43) Veröffentlichungstag der Anmeldung: 14.06.2017
(73) Patentinhaber: Westdeutscher Drahtseil-Verkauf Dolezych GmbH & Co. KG, 44147 Dortmund (DE)
(72) Erfinder: SCHÖBEL, Uwe, 58730 Fröndenberg (DE)
(74) Vertreter: Nunnenkamp, Jörg

(56) Entgegenhaltungen:
- DE-A1-102011 117 441
- DE-U1-202015 100 175
- US-A- 5 458 447
- US-A1- 2006 255 617
- US-A1- 2015 191 148

## Beschreibung

Die Erfindung betrifft eine Vorrichtung zur Sicherung von Ladung auf einer Ladefläche, insbesondere eine quer zur Längsrichtung der Ladefläche angeordnete Sperrvorrichtung zur Sicherung der Ladung auf der Ladefläche, mit einem Sicherungsnetz aus sich kreuzenden Gurtbändern, ferner mit beidrandseitig des Sicherungsnetzes angeordneten Anschlagvorrichtungen zum lösbaren Eingriff in Öffnungen sich im Wesentlichen gegenüberliegender Bordwände, und mit wenigstens einem längenveränderlichen Spanngurt mit Gutschlaufe und Spannvorrichtung, wobei die Gurtschlaufe flächenseitig an das Sicherungsnetz angeschlossen ist, um in Verbindung mit der Spannvorrichtung das Sicherungsnetz unter Anpassung an unterschiedliche lichte Weiten zwischen den Bordwänden spannen zu können, und wobei die Gurtschlaufe des Spanngurtes in beabstandet zueinander angeordneten Befestigungspunkten an einen gemeinsamen Längsgurt des Sicherungsnetzes angeschlossen sind.

Vorrichtungen zur Sicherung von Ladung auf einer Ladefläche mit einem Sicherungsnetz sind aus der Praxis und dem Schrifttum hinlänglich bekannt. Verwiesen sei hierzu u. a. auf die DE 20 2008 016 326 U1, welche eine entsprechende Vorrichtung beschreibt. Ähnliche Vorrichtungen sind Gegenstand der DE 20 2014 103 520 U1, die auf die Anmelderin zurückgeht.

Im Rahmen der gattungsbildenden Lehre nach der DE 20 2015 100 175 U1 ist eine Gurtschlaufe mit zwei in Spannrichtung zueinander versetzt angeordneten Schlaufenenden an ein Verbindungsstück bzw. einen Längsgurt des Sicherungsnetzes angeschlossen. Die beiden Gurtschlaufen können als einerseits Gurtband und andererseits Gummiband ausgebildet sein. Auf diese Weise soll die Vorrichtung einwandfrei gespannt werden können. Außerdem werden hierdurch etwaige randseitige Spalte möglichst vermieden, um ein Durchrutschen etwaiger Ladegüter zu verhindern.

Mit Hilfe der beschriebenen Vorrichtungen zur Sicherung von Ladung werden im allgemeinen Transportfahrzeuge wie beispielsweise LKW-Auflieger, LKW-Aufbauten aber auch Schienenwagons etc. ausgerüstet, um die dort oftmals hin und her bewegliche Ladung auf der Ladefläche zu sichern und ein Verrutschen zu vermeiden. Dadurch, dass sich die bekannten Vorrichtungen an den im Wesentlichen gegenüberliegenden Bordwänden lösbar anbringen lassen, kann das Sicherungsnetz bzw. die betreffende Vorrichtung an unterschiedliche Ladezustände angepasst werden. So ist es beispielsweise denkbar, eine quer zur Längsrichtung einer Ladefläche angeordnete Sperrvorrichtung sukzessive in ihrer Position quer zur Längsrichtung der Ladefläche zu verändern, wenn sich die Anzahl der Ladegüter auf der Ladefläche bei einem Auslieferungsvorgang verändert. Dadurch kann die fragliche Sperrvorrichtung zuverlässig die auf der Ladefläche befindlichen Ladegüter festhalten und insbesondere verhindern, dass die Ladegüter beim Beschleunigen und insbesondere Bremsen verrutschen und somit das Fahrverhalten eines hiermit ausgerüsteten Transportfahrzeuges ggf. negativ beeinflussen.

Neben solchen Sperrvorrichtungen zur Sicherung der Ladung auf der Ladefläche unter Rückgriff auf ein Sicherungsnetz sind auch herkömmliche Sperrvorrichtungen durch die EP 1 857 323 B1 bekannt geworden und werden in der Praxis eingesetzt. Diese Sperrvorrichtungen arbeiten mit einem Sperrbalken, der sich quer zur Längsrichtung der Ladefläche erstreckt und beispielsweise zwischen Rungen oder Einstecklatten eines solchermaßen ausgerüsteten Aufliegers oder Anhängers für Lastkraftwagen angeordnet ist. Zusätzlich kann eine Diagonalverspannung zum Verspannen des Sperrbalkens vorgesehen werden.

Bei aus der Praxis bekannten Sperrbalken wird so vorgegangen, dass diese in ihrer Länge veränderlich ausgelegt sind, um eine Anpassung an unterschiedliche lichte Weiten zwischen den sich im Wesentlichen gegenüberliegenden Bordwänden zu ermöglichen. Allerdings ist die Längenverstellung der Sperrbalken relativ kompliziert. Hinzukommt, dass solche Sperrbalken oftmals aus ineinandergesteckten Aluminiumprofilen aufgebaut sind. Dadurch besteht die Gefahr, dass der betreffende Sperrbalken bei daran anliegender oder dagegen stoßender Ladung verformt wird. Diese Verformung hat zur Folge, dass sich der Sperrbalken kaum noch aus seiner Position lösen lässt und im Regelfall für eine nochmalige Verwendung nicht mehr eingesetzt werden kann. Denn die Verformung verhindert eine Längenanpassung, so dass der Sperrbalken insgesamt nicht mehr zu gebrauchen ist. Hier setzt die Erfindung ein.

Der Erfindung liegt das technische Problem zugrunde, eine derartige Vorrichtung zur Sicherung von Ladung auf einer Ladefläche und insbesondere eine quer zur Längsrichtung einer Ladefläche angeordnete Sperrvorrichtung des eingangs beschriebenen Aufbaus so weiter zu entwickeln, dass eine einfache Längenanpassung an unterschiedliche lichte Weiten zwischen den sich im Wesentlichen gegenüberliegenden Bordwänden zur Verfügung gestellt wird und Beschädigungen durch das Ladegut vermieden werden.

Zur Lösung dieser technischen Problemstellung ist eine gattungsgemäße Vorrichtung zur Sicherung von Ladung auf einer Ladefläche und insbesondere eine quer zur Längsrichtung der Ladefläche angeordnete Sperrvorrichtung des eingangs beschriebenen Aufbaus dadurch gekennzeichnet, dass die Befestigungspunkte jeweils im Wesentlichen spiegelbildlich im Vergleich zu einer Quersymmetrieachse des Sicherungsnetzes vorgesehen sind, so dass auf diese Weise das Sicherungsnetz hinsichtlich seiner Ausdehnung in Längsrichtung variiert und an die jeweils zu überbrückende lichte Weite angepasst werden kann und es je nach der eingestellten Ausdehnung des Sicherungsnetzes in der betreffenden Längsrichtung zu einem mehr oder minder ausgeprägten Durchhang des Sicherungsnetzes zwischen den Befestigungspunkten kommt.

Im Rahmen der Erfindung wird also zunächst einmal die beanspruchte Vorrichtung bzw. Sperrvorrichtung zwischen den sich im Wesentlichen gegenüberliegenden Bordwänden gespannt. Die Bordwände sind dabei im Regelfall parallel zueinander angeordnet und definieren zwischen sich eine lichte Weite, welche letztendlich die Breite der Ladefläche vorgibt. Dabei wird die Vorrichtung bzw. Sperrvorrichtung lösbar mit der jeweiligen Bordwand verbunden, und zwar mit Hilfe der Anschlagvorrichtungen. Tatsächlich greift die jeweilige Anschlagvorrichtung hierzu in eine Öffnung an der Bordwand ein. Dazu sind die Anschlagvorrichtungen beidrandseitig des Sicherungsnetzes angeordnet, d. h. an beiden Rändern des Sicherungsnetzes, welche der zugehörigen Bordwand zugewandt bzw. benachbart hierzu angeordnet sind.

Die erfindungsgemäße Vorrichtung bzw. Sperrvorrichtung wird im Regelfall quer zu den beiden sich gegenüberliegenden Bordwänden gespannt. Grundsätzlich kann die Sperrvorrichtung aber auch einen mehr oder minder ausgeprägten Schrägverlauf gegenüber den im Wesentlichen gegenüberliegenden und meistens parallel zueinander verlaufenden Bordwänden einnehmen. Um nun diese unterschiedlichen Anbringungsarten realisieren zu können und folglich eine Anpassung an unterschiedliche lichte Weiten zwischen den Bordwänden zu ermöglichen, ist die wenigstens eine Gurtschlaufe flächenseitig an das Sicherungsnetz angeschlossen.

D.h., im Gegensatz zu den randseitig des Sicherungsnetzes angeordneten Anschlagvorrichtungen ist die Gurtschlaufe flächenseitig an das Sicherungsnetz angeschlossen. Mit anderen Worten, findet sich die betreffende Gurtschlaufe nicht randseitig, sondern auf der vom Sicherungsnetz aufgespannten Sicherungsfläche bzw. im Innern dieser Sicherungsfläche. Dabei kann die Gurtschlaufe grundsätzlich auf einer Seite des Sicherungsnetzes an dieses angeschlossen sein. Es ist aber auch möglich, beispielsweise eine Gurtschlaufe an der Vorderseite des Sicherungsnetzes und eine andere Gurtschlaufe an der Rückseite des Sicherungsnetzes vorzusehen.

Meistens sind zwei Gurtschlaufen realisiert, wobei eine Gurtschlaufe die Spannvorrichtung aufweist, in welche die andere (freie) Gurtschlaufe eingefädelt wird. Dadurch kann der Spanngurt gespannt werden. Das gilt in gleicher Weise für das Sicherungsnetz. Auf diese Weise stellt sich zwischen jeweiligen Befestigungspunkten der Gurtschlaufen ein mehr oder minder ausgeprägter Durchhang ein, je nachdem wie stark die Sperrvorrichtung in ihrer Länge verringert werden muss, um zwischen den Bordwänden gespannt werden zu können.

Da der längenveränderliche Spanngurt und folglich die beiden Gurtschlaufen und die Spannvorrichtung jeweils an das Sicherungsnetz angeschlossen sind, können sie prinzipiell nicht verloren gehen und stehen zur Längenverkürzung des Sicherungsnetzes bzw. der Sperrvorrichtung unmittelbar zur Verfügung. Das alles gelingt auf frappierend einfache Art und Weise.

Zugleich stellt die Erfindung durch den Rückgriff auf das Sicherungsnetz sicher, dass Beschädigungen des Ladegutes ebenso wie Beschädigungen des Sicherungsnetzes ausgeschlossen werden können, weil dieses flexibel bei etwaigen Bewegungen des Ladegutes nachgibt. Außerdem stellt das Sicherungsnetz mit den zwischen den sich kreuzenden Gurtbändern automatisch einstellenden Maschen etwaige Ausweichflächen für das Ladegut zur Verfügung, so dass Beschädigungen ausgeschlossen werden können.

Zugleich lässt sich die erfindungsgemäße Sperrvorrichtung problemlos an unterschiedliche lichte Weiten zwischen den Bordwänden anpassen und kann auch bei wechselnden lichten Weiten einwandfrei gespannt werden. Das gleiche gilt für den Fall, dass die Sperrvorrichtung zwischen den Bordwänden schräg verlaufend gespannt werden soll. Immer steht ein Variationsbereich der Länge der erfindungsgemäßen Sperrvorrichtung zur Verfügung, welcher sich aus der Differenz zwischen der Länge der Sperrvorrichtung bzw. des Sicherungsnetzes in unverkürztem Zustand und der maximal verkürzten Länge berechnet. Hierin sind die wesentlichen Vorteile zu sehen.

Nach vorteilhafter Ausgestaltung sind zwei oder mehr längenveränderliche Spanngurte mit jeweils Gurtschlaufe und Spannvorrichtung vorgesehen. Dabei verfügt jeder Spanngurrt wie beschrieben meistens über zwei Gurtschlaufen, die mit Hilfe der Spannvorrichtung längenvariabel eingestellt werden können. Dazu greift die (von der Spannvorrichtung) freie Gurtschlaufe in die meistens endseitig der anderen Gurtschlaufe vorgesehene Spannvorrichtung ein und sorgt die Spannvorrichtung für die gewünschte Verkürzung. Bei der Spannvorrichtung mag es sich um eine Spannklemme, eine Ratsche oder dergleichen handeln.

Die Gurtschlaufe bzw. die beiden Gurtschlaufen des Spanngurtes sind in der Regel an einen Längsgurt des Sicherungsnetzes angeschlossen, und zwar in Längsrichtung beabstandet voneinander. Meistens handelt es sich hierbei um einen gemeinsamen Längsgurt des Sicherungsnetzes. Außerdem empfiehlt die Erfindung, dass zwei Spanngurte realisiert sind, die jeweils an randseitige Längsgurte des Sicherungsnetzes angeschlossen sind. Tatsächlich ist die Auslegung meistens so getroffen, dass das Sicherungsnetz bzw. die Sperrvorrichtung rechteckig ausgelegt ist. Die beiden Spanngurte sind nun jeweils an die randseitigen Längsgurte der solchermaßen definierten rechteckigen Sicherungsfläche angeschlossen. Hierbei handelt es sich jeweils um die Längsrandseiten der fraglichen Sicherungsfläche bzw. die dort vorgesehenen randseitigen Längsgurte des Sicherungsnetzes.

Für die Verbindung der jeweiligen Gurtschlaufe mit dem Sicherungsnetz ist jeweils ein Befestigungspunkt vorgesehen. Tatsächlich sind die beiden Gurtschlaufen des betreffenden Spanngurtes erfindungsgemäß in den beabstandet zueinander angeordneten Befestigungspunkten an den gemeinsamen Längsgurt des Sicherungsnetzes angeschlossen. Auf diese Weise kann die Auslegung so getroffen werden, dass die Sperrvorrichtung ihre maximale Ausdehnung in Längsrichtung einnimmt, wenn die fraglichen Befestigungspunkte ihren möglichen Maximalabstand zueinander aufweisen. Dann ist der Spanngurt regelmäßig nicht gespannt und befindet sich das Sicherungsnetz in gespanntem Zustand ohne Durchhang. Kommt es jedoch zu einer Verkürzung des Sicherungsnetzes bzw. der Sperrvorrichtung in der fraglichen Längsrichtung, so nähern sich die beiden Befestigungspunkte an. Das kann so weit erfolgen, bis ein minimaler Abstand der Befestigungspunkte vorliegt. Hierzu korrespondiert ein maximaler Durchhang des Sicherungsnetzes zwischen diesen beiden Befestigungspunkten und eine minimale Länge der Sperrvorrichtung und folglich des zugehörigen Sicherungsnetzes.

Die Befestigungspunkte sind erfindungsgemäß jeweils im Wesentlichen spiegelbildlich im Vergleich zu der Quersymmetrieachse des Sicherungsnetzes vorgesehen. Außerdem hat es sich bewährt, wenn die Befestigungspunkte mit Kreuzungspunkten des Sicherungsnetzes zusammenfallen. In diesen Kreuzungspunkten des Sicherungsnetzes sind jeweiligen Längs- und Quergurte miteinander verbunden. Das kann auf jedwede Art und Weise geschehen, beispielsweise durch einen Nähvorgang, einen Klebevorgang oder auch dergestalt, dass die Gurtbänder in den jeweiligen Kreuzungspunkten durch ineinandergreifende sowie gurteigene Kunststofffäden miteinander gekoppelt sind. D.h., das Sicherungsnetz ist vorteilhaft aus den im Wesentlichen sich rechtwinklig kreuzenden Gurtbändern aufgebaut. Die Gurtbänder bestehen ihrerseits aus Kunststoff und können als gewebte Kunststoffbänder beispielsweise aus Polyester oder Polyamid hergestellt sein.

Die Anschlagvorrichtungen beidrandseitig des Sicherungsnetzes zum lösbaren Eingriff in die Öffnungen der sich gegenüberliegenden Bordwände sind im Regelfall in zugehörige Längsgurte des Sicherungsnetzes eingeschlauft. Dabei ist die Auslegung meistens so getroffen, dass insgesamt wenigstens vier Anschlagvorrichtungen an jeder Ecke des vorzugsweise rechteckförmigen Sicherungsnetzes realisiert sind. Dadurch kann die erfindungsgemäße Vorrichtung bzw. Sperrvorrichtung einwandfrei über die vier an den Ecken angreifenden Anschlagvorrichtungen gespannt werden.

Die Öffnungen zum lösbaren Eingriff der Anschlagvorrichtungen sind im Regelfall in an die jeweiligen Bordwände angeschlossenen Lochschienen ausgebildet. Bei den Lochschienen mag es sich um Schlüssellochschienen oder Schienen mit andersartig gestalteten Öffnungen handeln. Die Anschlagvorrichtungen können als Anschlaghaken ausgebildet sein, um jeweils lösbar in die fraglichen Öffnungen der Lochschienen eingreifen zu können. Die Wechselwirkung zwischen den Anschlagvorrichtungen und den Lochschienen mag dabei vergleichbar oder ähnlich so erfolgen, wie dies in dem Gebrauchsmuster DE 20 2014 103 520 U1 der Anmelderin beschrieben wird.

Die fraglichen Lochschienen an den jeweiligen Bordwänden setzen voraus, dass die Bordwände zur Anbringung der Lochschienen geeignet sind und im Regelfall eine plattenförmige Struktur aufweisen. Grundsätzlich können die Bordwände aber auch als Plane, Netz etc. ausgebildet sein. In diesem Fall greifen die Anschlagvorrichtungen in jeweils Öffnungen in der fraglichen Plane oder dem Netz ein, und zwar ebenfalls lösbar. Das ist möglich, ohne dass sich an der grundsätzlichen Funktionsweise der Erfindung etwas ändert. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Vorrichtung, eingebaut in einen Laderaum eines LKW oder LKW-Aufliegers,
- Fig. 2: die erfindungsgemäße Vorrichtung in einer Aufsicht schematisch.

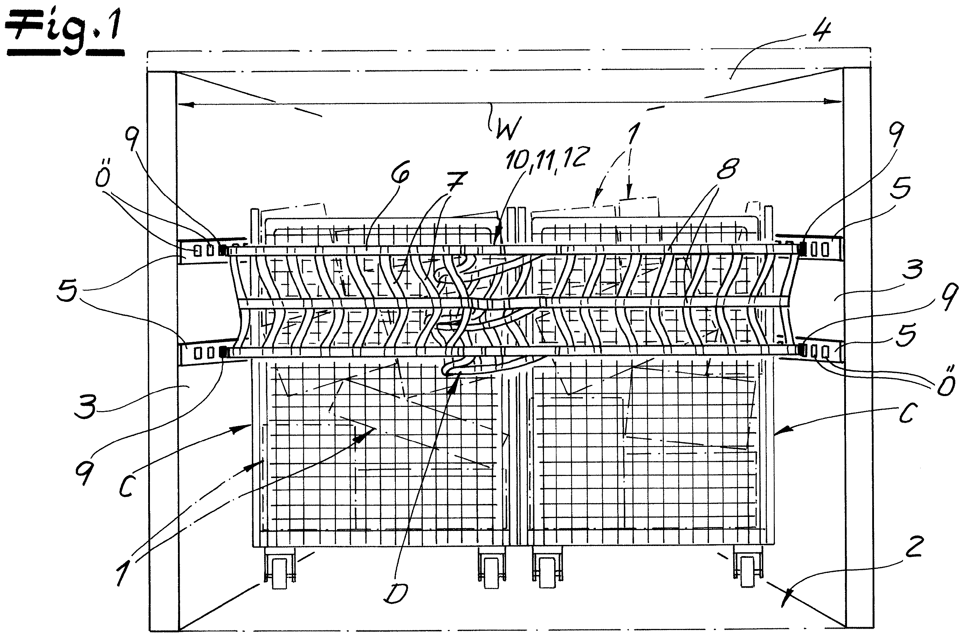

In der Fig. 1 ist eine Vorrichtung zur Sicherung von Ladung 1 auf einer Ladefläche 2 dargestellt. Bei der Ladung 1 handelt es sich im Ausführungsbeispiel um kleinformatige Ladegüter, beispielsweise Kartons. Im Ausführungsbeispiel werden die Kartons in Containern bzw. Rollwagen C aufgenommen, die gesichert werden müssen. Das gilt selbstverständlich nicht einschränkend und nur beispielhaft. Die Ladefläche 2 befindet sich vorliegend im Innern eines Transportraumes. Der Transportraum kann in einem LKW-Auflieger, einem LKW-Anhänger, einem Eisenbahnwagon etc. ausgebildet und vorgesehen sein. Tatsächlich wird die Ladefläche 2 bzw. der Transportraum von sich im Wesentlichen parallel gegenüberliegenden Bordwänden 3 einerseits und einem Dach 4 andererseits begrenzt. Das Dach 4 ist grundsätzlich entbehrlich.

Bei der nachfolgend noch im Detail zu beschreibenden Vorrichtung zur Sicherung der Ladung 1 auf der Ladefläche 2 handelt es sich im Ausführungsbeispiel um eine quer zur Längsrichtung der Ladefläche 2 angeordnete Sperrvorrichtung zur Sicherung der betreffenden Ladung 1 auf der Ladefläche 2. Die Längsrichtung der Ladefläche 2 korrespondiert mit der Längsrichtung der beiden sich im Wesentlichen parallel gegenüberliegenden Bordwände 3 und dort angeordneter und in der Fig. 1 zu erkennender Lochschienen 5. Im Vergleich zu dieser Längsrichtung der Ladefläche 2 (welche meistens auch mit der Fahrtrichtung des LKW übereinstimmt) ist die nachfolgend noch im Detail zu beschreibende Sperrvorrichtung quer angeordnet.

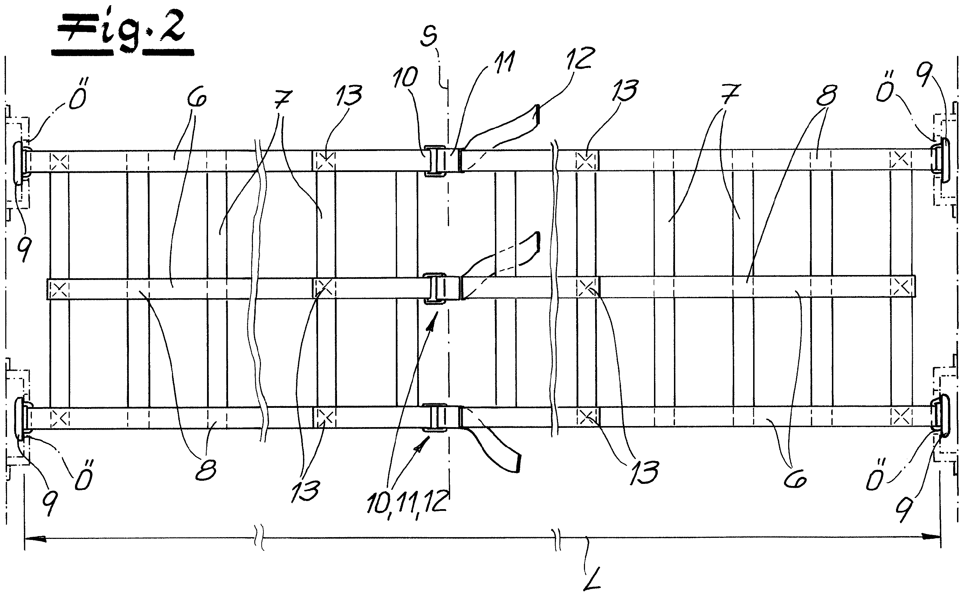

Tatsächlich weist die Sperrvorrichtung ein Sicherungsnetz 6, 7 aus sich kreuzenden Gurtbändern 6, 7 auf, wie man am besten anhand der Aufsicht in der Fig. 2 erkennt. Tatsächlich sind Längsgurte 6 und Quergurte 7 realisiert, die in jeweiligen Kreuzungspunkten 8 miteinander verbunden sind. Außerdem ist die Auslegung so getroffen, dass sich die Gurtbänder 6, 7 jeweils rechtwinklig kreuzen.

Bei den Gurtbändern 6, 7 handelt es sich um Gurtbänder 6, 7 aus Kunststoffgewebegurten 6, 7, die in den Kreuzungspunkten 8 miteinander vernäht oder miteinander verklebt werden können. Im Ausführungsbeispiel und nicht einschränkend sind die betreffenden Gurtbänder 6, 7 durch ineinandergreifende sowie gurteigene Kunststofffäden miteinander gekoppelt, und zwar über eine Maschenbindung, wie dies beispielhaft in dem zuvor bereits in Bezug genommenen Gebrauchsmuster DE 20 2014 103 520 U1 der Anmelderin beschrieben wird.

Neben dem Sicherungsnetz 6, 7 aus den sich kreuzenden Gurtbändern 6, 7 verfügt die Sperrvorrichtung noch über beidrandseitig des Sicherungsnetzes 6, 7 angeordnete Anschlagvorrichtungen 9. Bei diesen Anschlagvorrichtungen 9 kann es sich um Haken bzw. Anschlagvorrichtungen handeln, wie sie in der zuvor bereits in Bezug genommenen Gebrauchsmusterschrift DE 20 2014 103 520 U1 der Anmelderin im Detail beschrieben sind. Das gilt selbstverständlich nur beispielhaft.

Tatsächlich kommt es lediglich darauf an, dass die fraglichen Anschlagvorrichtungen 9 zum lösbaren Eingriff in Öffnungen Ö der sich gegenüberliegenden Bordwände 3 geeignet und vorgesehen sind. Die Öffnungen Ö sind im Beispielfall in den Lochschienen 5 ausgebildet, so dass die Anschlagvorrichtungen 9 und mit ihnen die erfindungsgemäße Sperrvorrichtung unterschiedliche Positionen im Innern des in der Fig. 1 dargestellten Laderaumes einnehmen kann.

Hierbei kommt es insbesondere darauf an, dass die fragliche Sperrvorrichtung jeweils zwischen den beiden parallel zueinander angeordneten und sich im Wesentlichen gegenüberliegenden Bordwände 3 gespannt ist, so dass die auf der Ladefläche 2 befindlichen Ladegüter bzw. die Ladung 1 einwandfrei im Innern des Laderaumes auf der Ladefläche 2 fixiert werden bzw. wird. Dazu lässt sich die erfindungsgemäße Sperrvorrichtung an eine lichte Weite W zwischen den Bordwänden 3 anpassen, wie nachfolgend noch näher erläutert wird.

Für die lösbare Festlegung des Sicherungsnetzes 6, 7 an den Bordwänden 3 sorgen - wie beschrieben - die Anschlagvorrichtungen 9. Die Anschlagvorrichtungen 9 sind zu diesem Zweck und ausweislich der Fig. 2 jeweils beidrandseitig des Sicherungsnetzes 6, 7 angeordnet. Tatsächlich finden sich die Anschlagvorrichtungen 9 jeweils an beiden Querrändern des Sicherungsnetzes 6, 7 folglich beidrandseitig. Dazu sind die jeweiligen Anschlagvorrichtungen 9 in zugehörige Längsgurte 6 eingeschlauft. Außerdem ist die Auslegung so getroffen, dass insgesamt vier Anschlagvorrichtungen 9 an jeder Ecke des rechteckförmigen Sicherungsnetzes 6, 7 vorgesehen sind und an die jeweiligen Längsgurte 6 durch Einschlaufen angeschlossen werden.

Um nun die erfindungsgemäße Sperrvorrichtung an unterschiedliche lichte Weiten W zwischen den Bordwänden 3 und folglich unterschiedlich breite Ladeflächen 2 anpassen zu können, sind im Ausführungsbeispiel mehrere längenveränderliche Spanngute 10, 11, 12 realisiert. Die Spanngurte 10, 11, 12 sind ihrerseits mit wenigstens einer Gurtschlaufe 10, 12 und einer Spannvorrichtung 11 ausgerüstet. Anhand der Darstellung in der Fig. 2 erkennt man, dass sich der jeweils längenveränderliche Spanngurt 10, 11, 12 aus einer Gurtschlaufe 10 mit der endseitigen Spannvorrichtung 11 einerseits und einer anderen freien Gurtschlaufe 12 andererseits zusammensetzt. Die beiden Gurtschlaufen 10, 12 sind flächenseitig an das Sicherungsnetz 6, 7 angeschlossen. Das erfolgt in Befestigungspunkten 13.

Der flächenseitige Anschluss meint, dass die fraglichen Befestigungspunkte 13 beabstandet von den jeweiligen Querrandseiten des Sicherungsnetzes 6, 7 platziert sind und folglich auch beabstandet von den jeweils querrandseitig an beiden Seiten vorgesehenen Anschlagvorrichtungen 9. Tatsächlich ist die Auslegung so getroffen, dass die Befestigungspunkte 13 jeweils im Wesentlichen spiegelbildlich im Vergleich zu einer Quersymmetrieachse S des Sicherungsnetzes 6, 7 vorgesehen und platziert sind. Auf diese Weise kann das Sicherungsnetz 6, 7 bzw. die erfindungsgemäße Sperrvorrichtung hinsichtlich ihrer Ausdehnung in ihrer Längsrichtung L variiert und an die jeweils zu überbrückende lichte Weite W angepasst werden. Je nach der eingestellten Ausdehnung des Sicherungsnetzes 6, 7 in der betreffenden Längsrichtung L, kommt es zu einem mehr oder minder ausgeprägtem Durchhang D des Sicherungsnetzes 6, 7 zwischen den Befestigungspunkten 13, wie man ihn in der Fig. 1 erkennt.

Um die Anpassung an unterschiedliche lichte Weiten W zwischen den Bordwänden 3 vornehmen zu können und das Sicherungsnetz 6, 7 zugleich spannen zu können, wird die freie Gurtschlaufe 12 in die Spannvorrichtung 11 am Ende der anderen Gurtschlaufe 10 eingeschlauft. Jetzt wird der Spanngurt 10, 11, 12 gespannt, so dass auf diese Weise das Sicherungsnetz 6, 7 zwischen den beiden Bordwänden 3 ebenfalls gespannt wird und sich der bereits beschriebene mehr oder minder ausgeprägte Durchhang D einstellt. Die Fig. 2 zeigt demgegenüber den komplett ausgebreiteten Zustand des Sicherungsnetzes 6, 7 und folglich die mit Hilfe der erfindungsgemäßen Sperrvorrichtung erzielbare maximale Länge in der Längsrichtung L.

Jede Verkürzung dieser maximalen Länge in der Längsrichtung L des Sicherungsnetzes 6, 7 korrespondiert dazu, dass sich die beidseitig der Quersymmetrieachse S gegenüberliegenden Befestigungspunkte 13 annähern. Dadurch kommt es zu dem bereits beschriebenen Durchhang D.

Man erkennt, dass die beiden Gurtschlaufen 10, 12 des Spanngurtes 10, 11, 12 an einen Längsgurt 6 des Sicherungsnetzes 6, 7 angeschlossen sind, und zwar an den übereinstimmenden Längsgurt 6. Außerdem ist die Auslegung so getroffen, dass zwei Spanngurte 10, 11, 12 realisiert sind, die jeweils an die randseitigen Längsgurte 6 des Sicherungsnetzes 6, 7 angeschlossen sind. Selbstverständlich kann auch jeder der dargestellten Längsgurte 6 mit einem zugehörigen Spanngurt 10, 11, 12 ausgerüstet werden.

Darüber hinaus erkennt man, dass die Befestigungspunkte 13 mit den Kreuzungspunkten 8 des Sicherungsnetzes 6,7 zusammenfallen. Dadurch können die jeweiligen Gurtschlaufen 10, 12 beim Verbinden der Gurte 6, 7 untereinander zugleich mit am Sicherungsnetz 6, 7 festgelegt werden. Grundsätzlich ist es natürlich auch möglich, die Befestigungspunkte 13 außerhalb der Kreuzungspunkte 8 des Sicherungsnetzes 6, 7 vorzusehen.

## Patentansprüche

1. Vorrichtung zur Sicherung von Ladung (1) auf einer Ladefläche (2), insbesondere quer zur Längsrichtung der Ladefläche (2) angeordnete Sperrvorrichtung zur Sicherung der Ladung (1) auf der Ladefläche (2), mit einem Sicherungsnetz (6, 7) aus sich kreuzenden Gurtbändern (6, 7), ferner mit beidrandseitig des Sicherungsnetzes (6, 7) angeordneten Anschlagvorrichtungen (9) zum lösbaren Eingriff in Öffnungen (Ö) sich im Wesentlichen gegenüberliegender Bordwände (3), und mit wenigstens einem längenveränderlichen Spanngurt (10, 11, 12) mit Gurtschlaufe (10, 12) und Spannvorrichtung (11), wobei
die Gurtschlaufe (10, 11) flächenseitig an das Sicherungsnetz (6, 7) angeschlossen ist, um in Verbindung mit der Spannvorrichtung (11) das Sicherungsnetz (6, 7) unter Anpassung an unterschiedliche lichte Weiten (W) zwischen den Bordwänden (3) spannen zu können, und wobei
die Gurtschlaufen (10, 12) des Spanngurtes (10, 11, 12) in beabstandet zueinander angeordneten Befestigungspunkten (13) an einen gemeinsamen Längsgurt (6) des Sicherungsnetzes (6, 7) angeschlossen sind,
**dadurch gekennzeichnet, dass**.
- die Befestigungspunkte (13) jeweils im Wesentlichen spiegelbildlich im Vergleich zu einer Quersymmetrieachse (S) des Sicherungsnetzes (6, 7) vorgesehen sind, so dass
- auf diese Weise das Sicherungsnetz (6, 7) hinsichtlich seiner Ausdehnung in Längsrichtung (L) variiert und an die jeweils zu überbrückende lichte Weite (W) angepasst werden kann und
- es je nach der eingestellten Ausdehnung des Sicherungsnetzes (6, 7) in der betreffenden Längsrichtung (L) zu einem mehr oder minder ausgeprägten Durchhang (D) des Sicherungsnetzes (6, 7) zwischen den Befestigungspunkten (13) kommt.

2. Vorrichtung nach Anspruch 1, **dadurch gekennzeichnet, dass** zwei oder mehr längenveränderliche Spanngurte (10, 11, 12) mit jeweils Gurtschlaufe (10, 12) und Spannvorrichtung (11) vorgesehen sind.

3. Vorrichtung nach Anspruch 1 oder 2, **dadurch gekennzeichnet, dass** die Gurtschlaufe (10, 12) des Spanngurtes (10, 11, 12) an einen Längsgurt (6) des Sicherungsnetzes (6, 7) angeschlossen ist.

4. Vorrichtung nach einem der Ansprüche 1 bis 3, **dadurch gekennzeichnet, dass** zwei Spanngurte (10, 11, 12) realisiert sind, die jeweils an randseitige Längsgurte (6) des Sicherungsnetzes (6, 7) angeschlossen sind.

5. Vorrichtung nach einem der Ansprüche 1 bis 4, **dadurch gekennzeichnet, dass** die Befestigungspunkte (13) mit Kreuzungspunkten (8) des Sicherungsnetzes (6, 7) zusammenfallen.

6. Vorrichtung nach einem der Ansprüche 1 bis 5, **dadurch gekennzeichnet, dass** die Anschlagvorrichtungen (9) in Längsgurte (6) des Sicherungsnetzes (6, 7) eingeschlauft sind.

7. Vorrichtung nach einem der Ansprüche 1 bis 6, **dadurch gekennzeichnet, dass** insgesamt wenigstens vier Anschlagvorrichtungen (9) an jeder Ecke des vorzugsweise rechteckförmigen Sicherungsnetzes (6, 7) realisiert sind.

8. Vorrichtung nach einem der Ansprüche 1 bis 7, **dadurch gekennzeichnet, dass** die Öffnungen (10) zum lösbaren Eingriff der Anschlagvorrichtungen (9) in an die jeweiligen Bordwände (3) angeschlossenen Lochschienen (5) ausgebildet sind.

9. Vorrichtung nach einem der Ansprüche 1 bis 8, **dadurch gekennzeichnet, dass** das Sicherungsnetz (6, 7) aus sich im Wesentlichen rechtwinklig kreuzenden Gurtbändern (6, 7) aus Kunststoff aufgebaut ist.

10. Vorrichtung nach einem der Ansprüche 1 bis 9, **dadurch gekennzeichnet, dass** die Gurtbänder (6, 7) in den jeweiligen Kreuzungspunkten (8) miteinander vernäht, verklebt oder durch ineinandergreifende sowie gurteigene Kunststofffäden miteinander gekoppelt sind.

## Claims

1. A device for securing a load (1) on a loading surface (2), in particular locking device arranged perpendicularly to the longitudinal direction of the loading surface (2) for securing the load (1) on the loading surface (2) with a securing net (6, 7) of crossing strap bands (6, 7), also with fastening devices (9) arranged on both edges of the securing net (6, 7) for detachable engagement in openings (Ö) in essentially opposite side walls (3) and with at least one length- adjustable tensioning strap (10, 11, 12) with a strap loop (10, 12) and tensioning device (11), wherein
the strap loop (10, 11) is connected with its surface side to the securing net (6, 7) in order in connection with the tensioning device (11) to tension the securing net (6, 7) while adapting to different clear widths (W) between the side walls (3), and wherein
the strap loops (10, 12) of the tensioning strap (10, 11, 12) are connected at spaced fastening points (13) on a common longitudinal strap (6) of the securing net (6, 7),
**characterised in that**
- the fastening points (13) are each provided essentially as a mirror image in comparison to a cross-symmetrical axis (S) of the securing net (6, 7) so that
- in this way the securing net (6, 7) varies in terms of its extent in the longitudinal direction (L) and can be adapted to the clear width (W) to be bridged in each case and
- depending on the established extent of the securing net (6, 7) in the respective longitudinal direction (L) a more or less pronounced sagging (D) of the securing net (6, 7) between the fastening points (13) comes about.

2. The device according to claim 1, **characterised in that** two or more length-adjustable tensioning straps (10, 11, 12) each with a strap loop (10, 12) and tensioning device (11) are provided.

3. The device according to claim 1 or 2, **characterised in that** the strap loop (10, 12) of the tensioning strap (10, 11, 12) is connected to a longitudinal strap (6) of the securing net (6, 7).

4. The device according to any one of claims 1 to 3, **characterised in that** there are two tensioning straps (10, 11, 12) which are each connected to marginal longitudinal straps (6) of the securing net (6, 7).

5. The device according to any one of claims 1 to 4, **characterised in that** the fastening points (13) coincide with crossing points (8) of the securing net (6, 7).

6. The device according any one of claims 1 to 5, **characterised in that** the fastening devices (9) are stowed in longitudinal straps (6) of the securing net (6, 7).

7. The device according to any one of claims 1 to 6 **characterised in that** in total at there are at least four fastening devices (9) at each corner of the preferably rectangular securing net (6, 7).

8. The device according to an one of claims 1 to 7, **characterised in that** the openings (10) for the detachable engagement of the fastening device (9) are formed in perforated rails (5) connected to the respective side walls (3).

9. The device according to any one of claims 1 to 8, **characterised in that** the securing net (6, 7) is made of plastic straps (6, 7) which essentially cross each other at right angles.

10. The device according to any one of claims 1 to 9, **characterised in that** at the respective crossing points (8) the straps (6, 7) are sewn to each other, adhered to each other or connected to each other through interlocking plastic threads belonging to the belts.

## Revendications

1. Dispositif, destiné à sécuriser un chargement (1) sur une surface de chargement (2), notamment dispositif de blocage placé à la transversale de la surface de chargement (2), pour sécuriser le chargement (1) sur la surface de chargement (2), pourvu d'un filet de sécurisation (6, 7) constitué de sangles (6, 7) qui s'entrecroisent, pourvu par ailleurs de dispositifs de butée (9) placés du côté des deux bords du filet de sécurisation (6, 7), destinées à l'engagement amovible dans des orifices (Ô) de parois de bordure (3) sensiblement opposées et pourvu d'au moins une sangle de serrage (10, 11, 12) à longueur variable, dotée d'une boucle de sangle (10, 12) et d'un dispositif de serrage (11),
la boucle de sangle (10, 11) étant raccordée côté plat sur le filet de sécurisation (6, 7), pour être en mesure de tendre le filet de sécurisation (6, 7) entre les parois de bordure (3), en association avec le dispositif de serrage (11) en l'adaptant à différentes largeurs intérieures (W) et
les boucles de sangle (10, 12) de la sangle de serrage (10, 11, 12) étant raccordée dans des points de fixation (13) placés avec un écart réciproque sur une sangle longitudinale (6) commune du filet de sécurisation (6, 7),
**caractérisé en ce que**
- les points de fixation (13) sont prévus sensiblement en symétrie spéculaire en comparaison d'un axe de symétrie transversale (S) du filet de sécurisation (6, 7), de sorte que
- de cette manière, le filet de sécurisation (6, 7) varie en direction longitudinale (L) au niveau de son extension et puisse être adapté à la largeur intérieure (W) qu'il convient respectivement de combler et
- et qu'en fonction de l'extension réglée du filet de sécurisation (6, 7), on atteigne dans la direction longitudinale (L) concernée un passage (D) plus ou moins marqué du filet de sécurisation (6, 7) entre les points de fixation (13).

2. Dispositif selon la revendication 1, **caractérisé en ce que** deux ou plusieurs sangles de serrage (10, 11, 12), dotées chacune d'une boucle de sangle (10, 12) et d'un dispositif de serrage (11) sont prévues.

3. Dispositif selon la revendication 1 ou 2, **caractérisé en ce que** la boucle de sangle (10, 12) de la sangle de serrage (10, 11, 12) est raccordée sur une sangle longitudinale (6) du filet de sécurisation (6, 7).

4. Dispositif selon l'une quelconque des revendications 1 à 3, **caractérisé en ce que** deux sangles de serrage (10, 11, 12) sont réalisées, qui sont raccordées chacune sur des sangles longitudinales (6) du filet de sécurisation (6, 7).

5. Dispositif selon l'une quelconque des revendications 1 à 4, **caractérisé en ce que** les points de fixation (13) coïncident avec des points de croisement (8) du filet de sécurisation (6, 7).

6. Dispositif selon l'une quelconque des revendications 1 à 5, **caractérisé en ce que** les dispositifs de butée (9) sont bouclés dans des sangle longitudinales (6) du filet de sécurisation (6, 7).

7. Dispositif selon l'une quelconque des revendications 1 à 6, **caractérisé en ce qu'**au total, au moins quatre dispositifs de butée (9) sont réalisés dans chaque coin du filet de sécurisation (6, 7) de préférence de forme rectangulaire.

8. Dispositif selon l'une quelconque des revendications 1 à 7, **caractérisé en ce que** les orifices (10) pour l'engagement amovible des dispositifs de butée (9) sont conçus dans des rails perforés (5) raccordés sur les parois de bordure (3) respectives.

9. Dispositif selon l'une quelconque des revendications 1 à 8, **caractérisé en ce que** le filet de sécurisation (6, 7) est conçu en sangles (6, 7) qui s'entrecroisent sensiblement à angle droit.

10. Dispositif selon l'une quelconque des revendications 1 à 9, **caractérisé en ce que** les sangles (6, 7) sont cousues ou collées l'une à l'autre sur les points de croisement (8) respectifs ou sont accouplées les unes aux autres par des fils en matière plastique qui s'engagent les uns dans les autres et qui sont propres à la sangle.
